# EUROPÄISCHE PATENTSCHRIFT

(11) **EP 1 984 091 B1**
(45) Veröffentlichungstag und Bekanntmachung des Hinweises auf die Patenterteilung: **26.10.2011**
(21) Anmeldenummer: 07711509.5
(22) Anmeldetag: 13.02.2007
(51) Int. Cl.: B01D 35/027, A47J 31/60, C02F 1/00

(54) **FILTERPATRONE ZUM EINSETZEN IN EINEN WASSERVORRATSTANK**
FILTER CARTRIDGE FOR USE IN A WATER STORAGE TANK
CARTOUCHE DE FILTRE DESTINEE A ETRE UTILISEE DANS UN RESERVOIR D'EAU

(30) Priorität: 14.02.2006 DE 102006006932
(43) Veröffentlichungstag der Anmeldung: 29.10.2008
(73) Patentinhaber: Aquis Wasser-Luft-Systeme GmbH, Lindau, 9445 Rebstein (CH)
(72) Erfinder: WAWRLA, Andreas, CH-9443 Widnau (CH)
(74) Vertreter: Roth, Klaus
(86) Internationale Anmeldenummer: PCT/EP2007/001201
(87) Internationale Veröffentlichungsnummer: WO 2007/093354

(56) Entgegenhaltungen:
- EP-A1- 1 340 442
- WO-A-2005/028073
- DE-A1- 3 014 493
- DE-A1- 10 359 443
- FR-A3- 2 475 520

## Beschreibung

Filterpatronen zum Einsetzen in einer Wasservorratstank einer Getränkemaschine, wie einer Espressomaschine oder dergleichen sind in der Regel mit einem Gehäuse ausgestattet, in dem ein aus Filtermaterial gebildetes Filterbett angeordnet ist. Derartige Filterpatronen sind beispielsweise aus der Druckschrift DE 197 17 054 bekannt.

Für den Anschluss der Filterpatrone an einem Anschlusselement des Wasservorratstanks wird in dieser Druckschrift die Verwendung eines Adapterteils beschrieben. Auf diese weise kann die Filterpatrone mit Hilfe entsprechender Adapterteile an alle gängigen Formen eines Wasservorratstanks angepasst werden. über die genaue Ausgestaltung eines solchen Adapters ist dieser Druckschrift jedoch kein Hinweis zu entnehmen.

Die DE 103 59 443 A1 beschreibt eine Filterpatrone mit einem als Fallrohr ausgebildeten zum Anschluss des Filterpatronen-Auslaufs an einem Wassertank vorgesehen Adapterstück. Der Wasserzulauf erfolgt direkt durch eine bodenseitig am Gehäuse der Wasserfilterpatrone ausgebildete Wassereinlassöffnung, in welcher zur Rückhaltung des im Filtergehäuse angeordneten Filtermaterials ein Filtersieb vorgesehen ist.

Aufgabe der Erfindung ist es daher, ausgehend von einer Druckschrift der einleitend genannten Art, eine darin beschriebene Filterpatrone zu verbessern.

Diese Aufgabe wird ausgehend von einer Filterpatrone gemäß dem Oberbegriff des Anspruchs 1 durch diese kennzeichnenden Merkmale gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Filterpatrone bei der die Wasserabfuhr aus dem Wassertank in die Filterpatrone außerhalb des Adapterteils erfolgt, dadurch aus, dass ein vom Adapterteil separates Steigrohr vorgesehen ist. Hierdurch ist die Ausgestaltung des Adapterteils besonders einfach, d.h. beispielsweise als einfaches Rohr, das austauschbar am Filtergehäuse befestigt, beispielsweise aufgeklippst, eingeschraubt oder auch nur eingesteckt wird. Die Anschlussseite des rohrförmigen Adapterteils wird dabei an den jeweils verwendbaren Wassertank angepasst.

In einer nicht erfindungsgemässen Ausführungsform wird zur Aufnahme des Wassers aus dem Wasservorratstank das Gehäuse der Filterpatrone mit öffnungen versehen. Hierzu wird vorzugsweise das Gehäuse der Filterpatrone derart ausgeführt, das es seitlich neben dem Adapterteil bis in den Bodenbereich des Wasservorratstanks geführt ist, so dass eine gute Entleerung des Wasservorratstanks durch tiefe Anordnung der Eintrittsöffnung des Filterpatronengehäuses möglich ist.

Erfindungsgemäss wird ein vom Adapterteil separates Steigrohr am Filtergehäuse zur Wasseraufnahme aus dem Wasservorratstank vorgesehen. Dieses Steigrohr kann dabei für eine Filterpatrone, die im Aufstromprinzip durchströmt wird unterhalb des Filterbettes am Filtergehäuse oder aber, z.B. für eine Ausführung mit Filterung im Abstrom, oberhalb des Filterbettes mit dem Filtergehäuse verbunden werden.

In einer besonderen Ausführungsform wird auch das Steigrohr zum Ansaugen des Wassers aus dem Wasservorratstank ebenfalls austauschbar ausgebildet, so dass auch der Ansaugort des Wassers durch ein austauschbares Teil flexibel einstellbar ist.

In einer besonderen Ausführung umfasst die Filterpatrone eine mit dem separaten Steigrohr verbindbare Steigleitung, die oberhalb des Filterbettes in der Filterpatrone ausmündet. In dieser Bauform ist die Durchströmung des gesamten Filterbettes im sogenannte Abstromverfahren von oben nach unten möglich, d. h. das gesamte Filterbett wird hierbei unter Zuhilfenahme der Gravitation durchströmt.

Die oberhalb des Filterbettes in der Filterpatrone ausmündende Steigleitung kann dabei in die Filterpatrone bzw. in deren Gehäuse integriert werden, sodass sie vollständig im Innern der Patrone verläuft. Sie kann aber auch außerhalb der Patrone als separate Leitung angeordnet werden.

Vorzugsweise wird das Adapterteil mit einer Dichtung versehen, die für den dichten Abschluss der Auslassleitung am bzw. im Anschlusselement des Wasservorratstanks sorgt. Ein solcher dichter Abschluss stellt sicher, dass ausschließlich gefiltertes Wasser die Ausgangsöffnung des Wasservorratstanks erreicht und nicht etwa ungefiltertes Wasser beigemischt wird.

Eine solche Dichtung wird vorteilhafterweise durch eine Axialdichtung für den dichten Abschluss der Auslassleitung des Adapterteils am Behälterboden gebildet. Eine solche Axialdichtung bietet eine einfache Handhabung, da durch axiales Andrücken der Dichtung am Behälterboden der erforderliche dichte Formschluss erzielt wird. Reibungskräfte, die beispielsweise beim Anpressen einer Radialdichtung an einen entsprechend geformten radialen Dichtsitz auftreten können, sind hierbei vermieden.

Darüber hinaus ist mit Hilfe einer Axialdichtung problemlos eine definierte Betriebsposition der Filterpatrone bzw. des Adapterteils gegebenenfalls unter Zuhilfenahme eines Anschlags möglich.

In einer Weiterbildung einer erfindungsgemäßen Filterpatrone wird im Filterbett wenigstens ein in Betrieb von oben nach unten durchströmter Strömungsbereich vorgesehen. Das Filterbett kann in diesen Bereichen demnach unter Zuhilfenahme der Gravitation durchströmt werden, sodass der Strömungswiderstand des Filterbettes wenigstens teilweise kompensiert wird.

Eine erfindungsgemäße Filterpatrone wird bevorzugt in einem Wasservorratstank eingesetzt, der ein Rückschlagventil aufweist, sodass der Wasservorratstank aus der entsprechenden Getränkemaschine entnehmbar ist, ohne dass Wasser durch dessen Bodenöffnung austreten kann. Der Wasservorratstank kann somit zum Befüllen aus der Maschine entnommen werden.

Die entsprechende Getränkemaschine wird wiederum vorteilhafterweise mit einer Saugpumpe versehen, um die zuverlässige Durchströmung der Filterpatrone und somit die zuverlässige Entnahme der gewünschten Wassermenge für die Getränkemaschine sicherzustellen.

Im Falle einer Durchströmung des Filterbetts im Abstrom wird, wie oben angeführt, der Strömungswiderstand des Filterbettes durch die Gravitation wenigstens teilweise kompensiert, sodass die Saugpumpe weniger groß dimensioniert werden muss.

Ein Ausführungsbeispiel der Erfindung ist in der Zeichnung 2 dargestellt und wird anhand der Figuren nachfolgend näher erläutert.

Im Einzelnen zeigen
- Figur 1: eine schematische Schnittdarstellung einer nicht erfindungsgemässen Filterpatrone ohne eine vom Adapter separat ausgebildete Steigleitung
- Figur 2: eine schematische Schnittdarstellung einer zweiten erfindungsgemässen Ausführungsform.

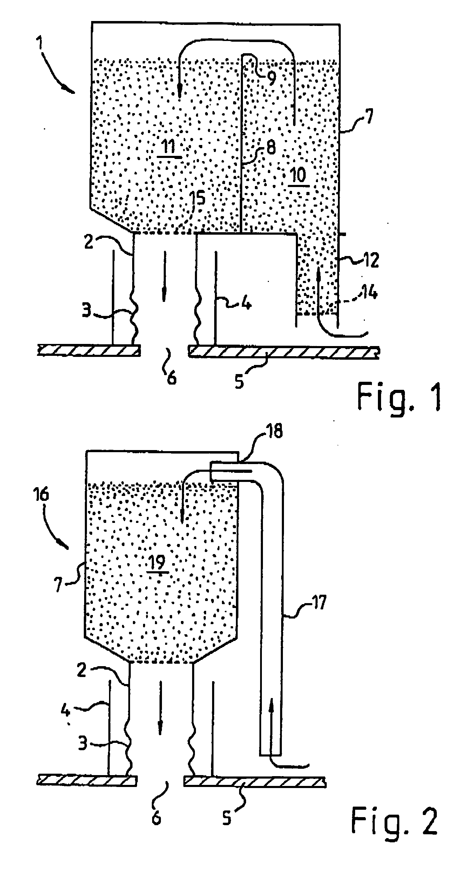

Die Filterpatrone 1 gemäß Figur 1 umfasst ein austauschbares Adapterteil 2, das als einfaches Rohr ausgestaltet ist. Das Adapterteil 2 ist am unteren Ende mit einer Balgdichtung 3 versehen ist, die als Axialdichtung wirkt. Dieses Adapterteil 2 ist in einen schematisch dargestellten Anschlusssockel 4 des Wasservorratstanks eingesteckt, von dem nur ein Teilbereich des Tankbodens 5 mit Auslassöffnung 6 dargestellz ist.

Das Gehäuse 7 der Filterpatrone ist durch eine Trennwand 8, die oben einen Überlauf 9 bildet in eine Einlasskammer 10 sowie eine Auslasskammer 11 unterteilt, die im vorliegenden Beispiel mit Filtermaterial, beispielsweise Ionentauscherharz und/oder Aktivkohle gefüllt sind, und die somit das Filterbett definieren. Die Einlasskammer 10 ist mit einem Fortsatz 12 bis in den Bodenbereich des Wasservorratstanks verlängert, wo eine Wassereintrittsöffnung vorgesehen ist. Das Filtermaterial ist durch Trennelemente 14, 15, beispielsweise in Form von Trennsieben in der Einlasskammer 10 bzw. der Auslasskammer 11 gehalten.

In der vorliegenden Ausführungsform wird das Wasser durch die Wassereintrittsöffnung des Fortsatzes 12 angesaugt und gelangt über den Überlauf 9 in den Bereich des Adapterteils 2 zur Entnahme durch die Auslassöffnung 6 des Tankbodens 5. Das Adapterteil 2 ist als einfaches Rohr und somit denkbar einfach auszugestalten. Die Schnittstelle zum Filtergehäuse 7 kann auf beliebige Art, beispielsweise durch Klipsen, durch eine Steckverbindung oder dergleichen gebildet werden, so dass das Adapterteil 2 leicht austauschbar ist.

In einer erfindungsgemässen Weiterbildung dieser Ausführungsform kann auch der Fortsatz 12 als Austauschteil ausgebildet werden, wobei in diesem Fall das Trennelement 14 weiter oben im Bereich des Filtergehäuses 7 anzubringen ist. Auch der Fortsatz 12 kann dann als einfaches Rohr so ausgebildet werden, mit dem die Wassereintrittsöffnung am gewünschten Ort im Wasservorratstrank angeordnet wird.

Figur 2 zeigt eine weitere erfindungsgemässe Ausführungsvariante einer Filterpatrone 16, die sich vom vorgenannten Ausführungsbeispiel dadurch unterscheidet, dass anstelle einer Einlasskammer 10 ein Steigrohr 17 seitlich neben dem Filterpatronengehäuse 7 angeordnet ist. Das Steigrohr 17 ist durch eine Öffnung 18 oberhalb des Filterbettes 19 ins Innere des Filtergehäuses 7 geführt und mündet dort aus. In dieser Ausführungsform findet der Filtervorgang im Filterbett 19 ausschließlich im Abstrom von oben nach unten statt. Das Adapterteil 2 ist in dieser Ausführungsform gleich wie im vorgenannten Ausführungsbeispiel ausgebildet. Auch hier kann die Austauschbarkeit zur Anpassung an einen entsprechenden Tanktyp über eine entsprechende Befestigung wie vorbeschrieben erfolgen.

In der Ausführungsvariante 2 kann das Steigrohr 17 fest mit dem Filtergehäuse 7 verbunden sein und aber auch als Austauschteil ausgebildet werden. In der dargestellten Form kann das Steigrohr 17 beispielsweise einfach über eine Steckverbindung im Bereich der Öffnung 1B als Austauschteil realisiert wird.

### Bezugszeichenliste:

- 1: Filterpatrone
- 2: Adapterteil
- 3: Balgdichtung
- 4: Anschlusssockel
- 5: Tankboden
- 6: Auslassöffnung
- 7: Gehäuse
- 8: Trennwand
- 9: Überlauf
- 10: Einlasskammer
- 11: Auslasskammer
- 12: Fortsatz
- 13: Wassereintrittsöffnung
- 14: Trennelement
- 15: Trennelement
- 16: Filterpatrone
- 17: Steigrohr
- 18: Öffnung
- 19: Filterbett

## Patentansprüche

1. Filterpatrone zum Einsetzen in einen Wasservorratstank einer Getränkemaschine, wie eine Espressomaschine oder dergleichen, mit einem Gehäuse, in dem ein aus Filtermaterial gebildetes Filterbett angeordnet ist, wobei ein Adapterteil zum Anschluss des Auslasses der Filterpatrone an einem Anschlusselement des Wasservorratstanks vorgesehen ist, wobei die Wasserzufuhr aus dem Wassertank in die Filterpatrone (1) außerhalb des Adapterteils (2) erfolgt, **dadurch gekennzeichnet, dass** ein vom Adapter separates Steigrohr (17) am Filtergehäuse (7) zur Wasseraufnahme aus dem Wasservorratstank vorgesehen ist.

2. Filterpatrone nach Anspruch 1, **dadurch gekennzeichnet, dass** das separate Steigrohr (17) eine Wassereintrittsöffnung zur Wasseraufnahme aus dem Wasservorratstank aufweist.

3. Filterpatrone nach einem der vorgenannten Ansprüche **dadurch gekennzeichnet, dass** die Filterpatrone eine zusätzliche innere oder eine äußere Steigleitung zur Führung des Wassers aus dem Wasservorratstank vor dem Eintritt in das Filterbett umfasst, die oberhalb des Filterbettes (19) in der Filterpatrone ausmündet.

4. Filterpatrone nach einem der vorgenannten Ansprüche **dadurch gekennzeichnet, dass** das Adapterteil (2) eine Dichtung (3) zum dichten Abschluss der Auslassleitung mit dem Anschlusselement des Wasservorratstanks aufweist.

5. Filterpatrone nach einem der vorgenannten Ansprüche **dadurch gekennzeichnet, dass** die Dichtung des Adapterteils als Axialdichtung (8) für den dichten Abschluss mit dem Behälterboden ausgebildet ist.

6. Filterpatrone nach einem der vorgenannten Ansprüche **dadurch gekennzeichnet, dass** im Filterbett wenigstens ein im Betrieb von oben nach unten durchströmter Strömungsbereich vorgesehen ist.

## Claims

1. Filter cartridge for inserting into a water storage tank of a beverage machine, such as an espresso machine or the like, comprising a housing, in which a filter bed made of filter material is arranged, wherein an adapter part is provided for connecting the outlet of the filter cartridge to a connection element of the water storage tank, wherein the water supply from the water tank into the filter cartridge (1) is provided outside the adapter part (2), **characterised in that** a riser pipe (17) separate from the adapter is provided on the filter housing (7) for taking up water from the water storage tank.

2. Filter cartridge according to claim 1, **characterised in that** the separate riser pipe (17) comprises a water inlet opening for taking up water from the water storage tank.

3. Filter cartridge according to one of the preceding claims, **characterised in that** the filter cartridge comprises an additional inner or outer riser pipe for guiding the water out of the water storage tank before the entry into the filter bed, which riser pipe discharges above the filter bed (19) in the filter cartridge.

4. Filter cartridge according to one of the preceding claims, **characterised in that** the adapter part (2) comprises a seal (3) for providing a sealed connection of the outlet pipe with the connecting element of the water storage tank.

5. Filter cartridge according to one of the preceding claims, **characterised in that** the seal of the adapter part is designed as an axial seal (8) for providing a sealing connection with the container base.

6. Filter cartridge according to one of the preceding claims, **characterised in that** in the filter bed at least one flow area is provided which Is flowed through during operation from top to bottom.

## Revendications

1. Cartouche de filtre destinée à être mise en oeuvre dans un réservoir d'eau d'une machine de distribution de boissons telle qu'une machine expresso ou similaire, comportant un boitier dans lequel est disposé un lit filtrant formé d'un matériau filtrant, un élément adaptateur permettant de relier la sortie de la cartouche de filtre à un élément de liaison du réservoir d'eau étant prévu, l'amenée d'eau du réservoir d'eau dans la cartouche de filtre (1) s'effectuant à l'extérieur de l'élément adaptateur (2),
**caractérisée en ce qu'**
il est prévu sur le boitier de filtre (7) un tuyau ascendant (17) séparé de l'adaptateur pour l'amenée d'eau provenant du réservoir d'eau.

2. Cartouche de filtre conforme à la revendication 1,
**caractérisée en ce que**
le tuyau ascendant séparé (17) comporte une ouverture d'entrée d'eau pour l'amenée d'eau provenant du réservoir d'eau.

3. Cartouche de filtre conforme à l'une des revendications précédentes,
**caractérisée en ce que**
la cartouche de filtre comporte une conduite ascendante interne ou externe supplémentaire pour transférer l'eau provenant du réservoir d'eau avant son entrée dans le lit filtrant, cette conduite débouchant dans la cartouche filtrante au dessus du lit filtrant (19).

4. Cartouche de filtre conforme à l'une des revendications précédentes,
**caractérisée en ce que**
l'élément d'adaptation (2) comporte une garniture d'étanchéité (3) pour l'obturation étanche de la liaison de la conduite de sortie avec l'élément de liaison du réservoir d'eau.

5. Cartouche de filtre conforme à l'une des revendications précédentes,
**caractérisée en ce que**
la garniture d'étanchéité de l'élément adaptateur est réalisée sous la forme d'une garniture d'étanchéité axiale (8) pour l'obturation étanche de la liaison avec le fond du conteneur.

6. Cartouche de filtre conforme à l'une des revendications précédentes,
**caractérisée en ce que**
dans le lit filtrant il est prévu au moins une zone d'écoulement traversée du haut vers le bas en cours de fonctionnement.
